(19) Europäisches Patentamt
European Patent Office
Office européen des brevets

(11) Veröffentlichungsnummer : **0 428 688 B1**

(12) # EUROPÄISCHE PATENTSCHRIFT

(45) Veröffentlichungstag der Patentschrift : **14.12.94 Patentblatt 94/50**

(51) Int. Cl.$^5$ : **G02F 1/1335**

(21) Anmeldenummer : **90909047.4**

(22) Anmeldetag : **08.06.90**

(86) Internationale Anmeldenummer : **PCT/EP90/00897**

(87) Internationale Veröffentlichungsnummer : **WO 90/16005 27.12.90 Gazette 90/29**

(54) **ELELTROOPTISCHES SYSTEM MIT KOMPENSATIONSFILM.**

(30) Priorität : **14.06.89 DE 3919397**
**01.08.89 DE 3925382**

(43) Veröffentlichungstag der Anmeldung : **29.05.91 Patentblatt 91/22**

(45) Bekanntmachung des Hinweises auf die Patenterteilung : **14.12.94 Patentblatt 94/50**

(84) Benannte Vertragsstaaten : **DE FR GB**

(56) Entgegenhaltungen :
**EP-A- 0 239 433**
**EP-A- 0 246 842**
**EP-A- 0 311 339**

(56) Entgegenhaltungen :
**ANGEWANDTE CHEMIE, vol. 99, 1987, VCH Verlagsgesellschaft mbH, Weinheim, DE; H. FINKELMANN: "Flüssigkristalline Polymere", pp. 840-84**

(73) Patentinhaber : **MERCK PATENT GmbH**
**Postfach,**
**Frankfurter Strasse 250**
**D-64271 Darmstadt (DE)**

(72) Erfinder : **SCHEUBLE, Bernhard**
**Grundweg 3**
**D-6104 Seeheim-Jugenheim (DE)**
Erfinder : **RIEGER, Bernhard**
**Hauptstrasse 31a**
**D-6115 Münster-Altheim (DE)**
Erfinder : **DORSCH, Dieter**
**Königsberger Strasse 17a**
**D-6105 Ober-Ramstadt (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die Erfindung betrifft ein elektrooptisches System, enthaltend mindestens eine ansteuerbare Flüssigkristallschicht und eine Vorrichtung zur Kompensation des optischen Gangunterschieds d.Δn der ansteuerbaren Flüssigkristallschichten.

Die Kompensation des optischen Gangunterschieds d.Δn optisch einachsiger Medien basiert auf einem z.B. im Babinet-Soleil Kompensator realisierten wohlbekannten physikalischen Prinzip. An das optisch einachsige Medium wird ein 2. optisch einachsiges Medium, das den gleichen optischen Gangunterschied d.Δn aufweist, angefügt, wobei jedoch die optischen Achsen beider Medien aufeinander senkrecht stehen. Linear polarisiertes Licht, dessen Polarisationsebene um 45° gegen die optische Achse des ersten Mediums geneigt ist, wird in einen ordentlichen und einen außerordentlichen Strahl aufgespalten. Da die optischen Achsen beider Medien senkrecht aufeinander stehen, läuft der ordentliche Strahl des 1. Mediums im 2. Medium als außerordentlicher Strahl und umgekehrt. Die optische Wegdifferenz im 1. Medium beträgt d.($n_e$-$n_o$), im 2. Medium hingegen d.($n_o$-$n_e$), so daß die Gesamtwegdifferenz Null ist und das aus den beiden optisch einachsigen Medien bestehende System keine Doppelbrechung aufweist.

Dieses auch als Verzögerungskompensation bekannte Prinzip ist erstmals 1981 für TN-Displays vorgeschlagen worden (US 4,443,065). Dabei wurde zur Beseitigung der unerwünschten Interferenzfarben ein 2. TN-Display als Kompensationsmedium verwendet. Ebenso können die Interferenzfarben von STN-Displays dadurch kompensiert werden, daß ein 2. STN-Display mit entgegengesetztem Helixdrehsinn, sonst aber gleichen Eigenschaften hinzugefügt wird (K. Katoh, Y. Endo, M. Akatsuka, M. Ohgawara und K. Sawada, Jap. J. Appl. Phys. 26 (1987) L 1784); SID Digest Vol. 20, 1989, papers 22.3, 22.4, 22.5 und 22.6). Bei ECB-Displays wird eine Kombination von 2 ECB-Zellen benutzt, wobei die Flüssigkristallmoleküle in beiden Zellen den gleichen Pretilt haben und im geschalteten Zustand den gleichen Winkel zur homöotropen Richtung aufweisen, wobei jedoch der Drehsinn dieser Winkel gegensinnig ist. Weiter ist für ECB-Displays die Verwendung einer planar orientierten, optisch negativen diskotischen Flüssigkristallschicht vorgeschlagen worden (DE 39 11 620).

Die Verwendung einer zweiten nicht notwendigerweise angesteuerten Flüssigkristallschicht als Kompensationsmedium in elektrooptischen Systemen ist einerseits vorteilhaft, da die zur Informationsanzeige bzw. zur Kompensation benutzte Flüssigkristallschicht eine identische Temperaturabhängigkeit der Doppelbrechung aufweisen, was eine Kompensation in einem weiten Temperaturbereich ermöglicht. Darüberhinaus zeigen beide Flüssigkristallschichten eine weitgehend identische Dispersion, d.h. eine weitgehend identische Wellenlängenabhängigkeit der Doppelbrechung. Andererseits jedoch führt die Verwendung von 2 oder mehr Flüssigkristallschichten zu erhöhten Produktionskosten, zu einem verringerten Ausstoß bei der Produktion und zu einem deutlich höheren Gewicht der Displays.

Wegen dieser Nachteile sind organische Kompensationsfilme auf der Basis von Polykarbonat, Polyvinylalkohol oder Polyethylenterephthalat entwickelt worden. Mit derartigen Kompensationsfilmen ausgestattete elektrooptische Systeme weisen jedoch im Vergleich zu 2- oder Mehrschichtendisplays einen verminderten Kontrast, eine höhere Blickwinkelabhängigkeit des Kontrastes und einen deutlich kleineren Arbeitstemperaturbereich auf. Farbdisplays erfordern aufgrund unterschiedlicher Dispersion zwischen Kompensationsfilm und LCD mehr als einen Kompensationsfilm; so werden z.B. in EP 0,311,339 mehrschichtige Kompensationsvorrichtungen beschrieben, welche auf uniaxial Verstreckten Polyvinylalkoholfilmen basieren. Weiterhin ist die Herstellung organischer Kompensationsfilme ziemlich kompliziert und erfordert zur Erzielung der optischen Einachsigkeit eine präzise 2-dimensionale Streckung des organischen polymeren Materials.

Es besteht somit immer noch ein erheblicher Bedarf an elektrooptischen Systemen, die eine Vorrichtung zur Kompensation des optischen Gangunterschieds d.Δn aufweisen, wobei diese Vorrichtung die Nachteile bisher realisierter Kompensationsmedien nicht aufweist, sondern durch gute optische Eigenschaften, eine Temperatur- und Wellenlängenabhängigkeit, die mit der der zur Informationsanzeige benutzten Flüssigkristallschicht weitgehend identisch ist, und eine vergleichsweise einfache und kostengünstige Herstellbarkeit gekennzeichnet ist.

Überraschenderweise wurde nun gefunden, daß diese Aufgabe durch die Bereitstellung der erfindungsgemäßen elektrooptischen Systeme gelöst werden kann.

Gegenstand der Erfindung sind somit elektrooptische Systeme, enthaltend mindestens eine ansteuerbare Flüssigkristallschicht und eine auf einem flüssigkristallinen Polymer basierende Vorrichtung zur Kompensation des optischen Gangunterschieds d.Δn der ansteuerbaren Flüssigkristallschicht bzw. -schichten, dadurch gekennzeichnet, daß als flüssigkristalline Polymere Seitenkettenpolymere verwendet werden, enthaltend Monomereinheiten der Formel I

```
-(-P-)-
   |
  Sp-B
```

I

worin

P eine Polymerhauptketteneinheit,

Sp eine bivalente Spacergruppe, und

B einen Organischen "rod-like"-Rest mit mindestens zwei sechsgliedrigen Gruppen, einen "disk-like" oder "board-like"-Rest bedeutet.

Gegenstand der Erfindung sind weiter elektrooptische Systeme, enthaltend mindestens eine ansteuerbare Flüssigkristallschicht und eine auf einem flüssigkristallinen Polymer basierende Vorrichtung zur Kompensation des optischen Gangunterschieds d.Δn der ansteuerbaren Flüssigkristallschicht bzw. schichten, dadurch gekennzeichnet, daß als flüssigkristalline Polymere Elastomere Verwendet werden, die 3-dimensional Vernetzte Monomereinheiten der Formel II enthalten

```
——(P)——
|   |
|  Sp-B
V
|
```

II

worin

P eine Polymerhauptketteneinheit,

Sp eine bivalente Spacergruppe,

B einen Organischen "rod-like"-Rest mit mindestens zwei sechsgliedrigen Gruppen, einen "disk-like"- oder "board-like"-Rest, und

V eine vernetztende Einheit zwischen benachbarten Polymerketten bedeutet.

Das flüssigkristalline Polymer kann im Arbeitstemperaturbereich eine nematische, smektische und/oder cholesterische und insbesondere eine nematische und/oder smektische Phase aufweisen.

Das flüssigkristalline Polymer weist bevorzugt eine Glastemperatur $T_G > 50$ °C auf. Das Verhältnis aus dem optischen Gangunterschied der Kompensationsschicht zu dem der ansteuerbaren Flüssigkristallschicht(en) beträgt vorzugsweise

$$0{,}5 \leqq \frac{(d\,.\,\Delta n)_{komp}}{(d\,.\,\Delta n)_{FK}} \leqq 1{,}5$$

und insbesondere

$$0{,}8 \leqq \frac{(d\,.\,\Delta n)_{komp}}{(d\,.\,\Delta n)_{FK}} \leqq 1{,}2$$

B ist bevorzugt ein Rest der Formel III

$$R^1\text{-}(A^1\text{-}Z^1)_n\text{-}A^2\text{-}Z^2\text{-}A^3\text{-} \qquad \text{III}$$

worin

$R^1$ F, CN oder ein unsubstituierter oder durch mindestens ein Halogenatom substituierter Alkylrest mit jeweils 1-15 C-Atomen, worin eine oder mehrere nicht benachbarte $CH_2$-Gruppen durch O- und/oder S-Atome und/oder durch -CO-, -O-CO-, -CO-O-, -O-CO-O-, -S-CO- und/oder -CO-S- und/oder -CH=CH-Gruppen ersetzt sein können,

$Z^1$ und $Z^2$ jeweils unabhängig voneinander -CO-O-, -O-CO-, $-CH_2CH_2-$, $-CH_2-O-$, $O-CH_2-$, -C≡C- oder eine Einfachbindung,

$A^1$, $A^2$ und $A^3$ jeweils unabhängig voneinander eine 1,4-Phenylengruppe, worin auch eine oder mehrere CH-Gruppen durch N ersetzt sein können, eine 1,4-Cyclohexylengruppe, worin auch eine oder zwei nicht benachbarte $CH_2$-Gruppen durch O und/oder S ersetzt sein können, eine 1,4-Cyclohexenylengruppe, eine 1,4-Bicyclo(2,2,2)-octylengruppe, eine Piperidin-1,4-diylgruppe, eine Naphthalin-2,6-diylgruppe, eine Decahydronaphthalin-2,6-diylgruppe, eine 1,2,3,4-Tetrahydronaphthalin-2,6-diylgruppe, wobei alle diese Gruppen unsubstituiert

oder durch Halogen, Nitril und/oder 1-4-C-Alkyl ein- oder mehrfach substituiert sein können,

n 0, 1, 2 oder 3 ist.

B ist besonders bevorzugt ein Rest der Formel III, worin $R^1$, $Z^1$ und $Z^2$, $A^1$, $A^2$ und $A^3$ und n die oben angegebene Bedeutung haben mit der Maßgabe, daß im Fall n = 1, $A^1 = A^2 = A^3$ = Phe, $Z^2$ = OOC und $Z^1$ = Einfachbindung $R^1$ nicht $OCH_3$ bedeutet.

Sp ist bevorzugt eine Alkylengruppe mit 1-20 C-Atomen, worin auch eine oder mehrere nicht benachbarte $CH_2$-Gruppen durch -O-, -S-, -CO-, -O-CO-, -S-CO-, -O-COO-, -CO-S-, -CO-O-, -CH-Halogen, -CHCN-, -CH=CH- und -C≡C- ersetzt sein können. Sp hat besonders bevorzugt die gerade angegebene Bedeutung mit der Maßgabe, daß im Fall B = -Phe-COO-Phe-Phe-$OCH_3$ Sp nicht -COO-$(CH_2)_2$-O- bedeutet.

Weiter bevorzugt sind elektrooptische Systeme, die auf dem ECB-Prinzip oder auf dem Prinzip der verdrillten nematischen Zelle basieren, wobei der Verdrillungswinkel $\beta$ bevorzugt zwischen $\pi/4$ und 3 $\pi$ liegt.

Gegenstand der Erfindung sind weiter Verfahren zur Herstellung einer Vorrichtung zur Kompensation des optischen Gangunterschieds d.$\Delta$n der ansteuerbaren Flüssigkristallshichten, welche auf einem der beschriebenen flüssigkristallinen Seitenkettenpolymere oder Elastomere basiert, dadurch gekennzeichnet, daß das flüssigkristalline Polymer oberhalb der Glastemperatur durch Anlegen eines elektrischen oder magnetischen Feldes oder durch mechanische Spannung axial orientiert wird, und daß diese Orientierung durch Abkühlung des flüssigkristallinen Polymers auf Temperaturen, die kleiner als die Glastemperatur sind, eingefroren wird.

Gegenstand der Erfindung ist weiter die Verwendung der beschriebenen flüssigkristallinen Seitenkettenpolymere und Elastomere in elektrooptischen Systemen zur Kompensation des optischen Gangunterschieds der ansteuerbaren Flüssigkristallschichten.

Die erfindungsgemäßen elektrooptischen Systeme enthalten mindestens eine ansteuerbare Flüssigkristallschicht, die sich entsprechend der üblichen Bauweise jeweils zwischen 2 planparallelen Trägerplatten befinden, die mit einer Umrandung eine Zelle bilden. Auf den Innenseiten der Trägerplatten sind Elektrodenschichten mit darüberliegenden Orientierungsschichten angeordnet. Der Begriff übliche Bauweise ist hier weit gefaßt und schließt auch alle Abwandlungen und Modifikationen ein. Die Verwendung von 1 oder 2 ansteuerbaren Flüssigkristallschichten, insbesondere jedoch von nur 1 ansteuerbaren Flüssigkristallschicht ist bevorzugt.

Zur Kompensation des optischen Gangunterschieds d,$\Delta$n der ansteuerbaren Flüssigkristallschicht(en) ist parallel zu dieser (diesen) eine auf einem flüssigkristallinen Polymer basierende Vorrichtung, i.a. ein dünner Film angeordnet. Grundsätzlich kann man 2 verschiedene Typen flüssigkristalliner Polymere unterscheiden. Während bei den Seitenkettenpolymeren die mesogenen Monomere - meist über ein flexibles Zwischenstück (Spacer) - an die polymere Hauptkette des Nakromoleküls angeheftet sind, sind bei Hauptkettenpolymeren die mesogenen Monomere gegebenenfalls über flexible Spacer, gewinkelte oder versetzte Momonomere oder andere Zwischengruppen zu mehr oder weniger starren Hauptketten verknüpft. Die Polymerhauptketten können in beiden Fällen außerdem 3-dimensional vernetzt sein, wodurch flüssigkristalline Elastomere entstehen.

Flüssigkristalline Polymere können durch zahlreiche Phasenübergangstemperaturen charakterisiert werden, die üblicherweise in einem DSC- (Differential Scanning Calorimetry) oder DTA- (Differential Thermal Analysis) -Scan beobachtet werden. Von großer Bedeutung ist die Glasübergangstemperatur, unterhalb der langreichweitige Bindungen eingefroren sind und das flüssigkristalline Polymer in ein amorphes Glas übergeht. Werden flüssigkristalline Polymere, insbesondere jedoch Seitenkettenpolymere und Elastomere, auf Temperaturen oberhalb der Glastemperatur $T_G$ erwärmt, können sie durch Einwirken einer mechanischen Spannung und/oder eines elektrischen und/oder magnetischen Feldes axial ausgerichtet werden. Kühlt man das Polymer danach bei eingeschaltetem Feld bzw. unter Beibehaltung der mechanischen Spannung ab, bleibt die Orientierung erhalten und es werden uniaxiale oder auch biaxiale (F. Hessel und H. Finkelmann, Polym. Bull. 15 (1986) 349; F. Hessel, R.P. Herr und H. Finkelmann, Makromol. Chem 188 (1987) 1597) Polymere erhalten. Die genaue experimentelle Vorgehensweise bei der Bestimmung der Glastemperatur mittels DSC oder DTA ist z.B. in P.D. Jam, O. Menis, ICTA-Certificate, distributed by the US NBS as GM-754, beschrieben.

Die Flüssigkristallpolymere sind i.a. in Form eines dünnen Filmes auf einer eine der ansteuerbaren Flüssigkristallschichten begrenzenden Trägerplatte angeordnet. Gegebenenfalls ist zum mechanischen Schutz über dem Film eine weitere Trägerplatte angebracht. Bei Verwendung mehrerer ansteuerbarer Flüssigkristallschichten kann sich der Kompensationsfilm auch zwischen 2 verschiedenen Schichten zugeordneten Trägerplatten befinden, wobei er diese auch miteinander verkleben kann. Die axiale Ausrichtung des Films kann vor oder nach Aufbringung auf die Trägerplatte erfolgen. Wegen der langreichweitigen Ordnung unterhalb der Glasübergangstemperatur $T_G$ weisen flüssigkristalline Polymere häufig eine große optische Anisotropie $\Delta$n auf, so daß zur Kompensation des optischen Gangunterschieds dünne Filme verwendet werden können, wodurch die Transparenz des optischen Systems erhöht wird.

Da sich die optische Anisotropie beim Glasübergang sprunghaft ändert ist der Arbeitsbereich flüssigkristallin-polymerer Kompensationsfilmen i.a. auf $T < T_G$ begrenzt. Bevorzugt werden flüssigkristalline Polymere verwendet, deren Glasübergangstemperatur $T_G$ 50 °C oder mehr beträgt.

Als flüssigkristalline Polymere werden bevorzugt Seitenkettenpolymere der Formel I verwendet

```
-(-P-)-
   |                                        I
  Sp-B
```

worin Sp und B die oben angegebene Bedeutung haben.

Weiter werden als flüssigkristalline Polymere bevorzugt Elastomere verwendet, die 3-dimensional vernetzte Monomereinheiten der Formel II enthalten,

```
——(P)——
|   |
|   Sp-B                                      II
V
|
```

worin P, Sp, B und V die oben angegebene Bedeutung haben.

Die Herstellung von flüssigkristallinen Seitenkettenpolymeren und Elastomeren erfolgt nach an sich bekannten Polymerisationsverfahren, wie sie in der Literatur beschrieben sind (z.B. in den Standardwerken wie Ocian, Principles of Polymerization, Mc Graw-Hill, New York), und zwar unter Reaktionsbedingungen, die für die Umsetzungen bekannt und geeignet sind. Dabei kann man auch von an sich bekannten, hier nicht näher erwähnten Varianten Gebrauch machen.

Bei den flüssigkristallinen Seitenkettenpolymeren können einerseits bereits mesogene Gruppen tragende Monomere bzw. Monomere und Comonomere polymerisiert werden, wobei hier weiter zwischen Kettenwachstumsreaktionen (z.B. radikalische oder ionische Polymerisation) und Schrittwachstumsreaktionen (z.B. Polykondensation oder Polyaddition) unterschieden werden kann. Andererseits können die mesogenen Gruppen nachträglich mit Hilfe einer sogenannten polymer-analogen Umsetzung an bereits bestehende Polymerketten angeheftet werden.

Flüssigkristalline Elastomere können durch eine 3-dimensionale Vernetzung sowohl von flüssigkristallinen Hauptkettenpolymeren als auch von flüssigkristallinen Seitenkettenpolymeren erhalten werden, wobei jedoch die Verwendung von Seitenkettenpolymeren bevorzugt ist.

Dabei werden i.a.Vernetzungsmittel zugesetzt, deren Moleküle 2 oder mehr reaktionsfähige Stellen aufweisen.

Elastomere können weiter durch Polymerisation von Monomeren und/oder Oligomeren hergestellt werden, wobei diese niedermolekularen Verbindungen mehr als 2 Verknüpfungsstellen im Molekül aufweisen. Besonders bevorzugt sind 2 C-C-Doppelbindungen aufweisende Moleküle, aber auch Moleküle, die eine C-C-Doppelbindung und eine oder mehrere Hydroxylgruppen und/oder Carbonylgruppen und/oder andere zur Polymerisation befähigte Gruppen enthalten, können verwendet werden. Ganz besonders bevorzugt sind Divinyl-, Diacryloyl- und Vinyl-acryloylverbindungen. Weiterhin bevorzugt ist auch der Einsatz von niedermolekularen Verbindungen ohne C-C-Doppelbindung.

Die niedermolekularen Verbindungen sind bevorzugt flüssigkristallin und/oder tragen bevorzugt bereits mesogene Gruppen. Es ist aber auch möglich, die mesogenen Gruppen nach der Synthese des Elastomers durch polymer-analoge Umsetzungen (z. B. Aufpropfungsreaktionen, vgl. DE 38 17 088, 38 11 334) an das Polymer anzuheften.

Die Synthese des Elastomers aus niedermolekularen Verbindungen hat häufig insbesondere den Vorteil, daß durch Variation der Synthesetemperatur wie z. B. der Polymerisationstemperatur insbesondere die optische Anisotropie $\Delta n$ innerhalb eines gewissen Bereiches einfach variiert werden kann, was die Anpassung der optischen Gangunterschiede von Kompensationsfilm und Flüssigkristall erheblich erleichtert.

Die Herstellung flüssigkristalliner Seitenkettenpolymere und flüssigkristalliner Elastomere erfolgt bevorzugt nach Verfahren, wie sie in DE 38 17 088, DE 38 11 334 und DE 36 21 581 beschrieben sind.

Als polymeres Rückgrat -(-P-)- kommen prinzipiell alle Polymeren in Frage, deren Ketten eine gewisse Flexibilität aufweisen. Es kann sich hierbei um lineare, verzweigte oder cyclische Polymerketten handeln. Der Polymerisationsgrad beträgt normalerweise mindestens 10, vorzugsweise 20-100. Es kommen jedoch auch Oligomere mit 3 bis 15, insbesondere mit 4 bis 7 Monomereinheiten, in Frage.

Vorzugsweise werden Polymere mit C-C-Hauptketten, Änsbesondere Polyacrylate, -methacrylate, -α-halogenacrylate, -α-cyanacrylate, -acrylamide, -acrylnitrile oder -methylenmalonate eingesetzt. Weiterhin bevorzugt sind auch Polymere mit Heteroatomen in der Hauptkette, beispielsweise Polyether, -ester, -amide, -imide oder -urethane oder insbesondere Polysiloxane. Im Fall -Sp-B = $-COO-(CH_2)_2-O-Phe-COO-Phe-Phe-OCH_3$ ist Methacrylat als polymeres Rückgrat i.a. weniger bevorzugt.

Als Spacer kommen vor allem lineare oder verzweigte Alkylengruppen mit 1-20 C-Atomen in Betracht, worin auch eine oder mehrere nicht benachbarte $CH_2$-Gruppen durch -O-, -S-, -CO-, -O-CO-, -S-CO-, -O-COO-, -CO-S-, -CO-O-, -CH-Halogen, -CHCN-, -CH=CH- und -C≡C- ersetzt sein können.

Als Spacer sind beispielsweise folgende Gruppen geeignet: Ethylen, Propylen, Butylen, Pentylen, Hexlen, Octylen, Decylen, Undecylen, Dodecylen, Octadecylen, Ethylenoxyethylen, Methylenoxybutylen, Ethylenthioethylen, Ethylen-N-methyliminoethylen oder 1-Methylalkylen.

Als Beispiele für Vernetzer seien Schwefel, Hexamethylentetramin, Paraformaldehyd, Zinkoxid, Styrol, Divinylbenzol, Dialkylalkohol, Amine, Fettsäureamide, Oligoalkene, Oligosulfide und Diisocyanate genannt, wobei diese Beispiele, ebenso wie die für Sp und P angeführten, die Erfindung lediglich erläutern sollen, ohne sie jedoch zu begrenzen.

Bevorzugt sind scheibchenförmige ("disk-like") mesogene Gruppen und insbesondere diskotische Gruppen als Rest B. Diese Gruppen ordnen sich bei ausreichender Flexibilität der Spacer oberhalb von $T_G$ manchmal spontan, d.h. ohne Einwirkung eines äußeren Feldes, parallel zueinander an. Beispielhaft sei eine Reihe diskotischer flüssigkristalliner Verbindungen genannt, wobei diese Aufzählung die Erfindung lediglich erläutern soll, ohne sie jedoch zu begrenzen:

(1) hexasubstituiertes Benzol

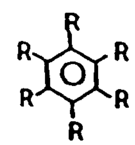

(2) 2, 3, 6, 7, 10, 11-hexasubstituierte Triphenyle

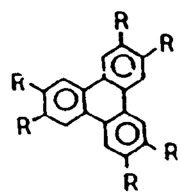

(3) 2, 3, 7, 8, 12, 13-hexasubstituierte Truxene bzw. deren oxidierte Homologe

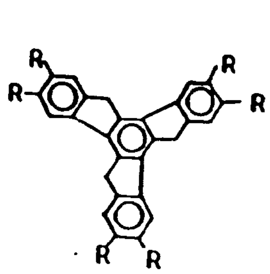

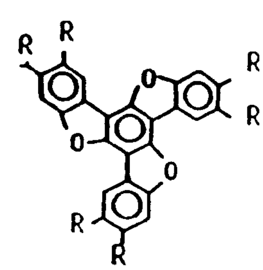

(4) 1, 2, 3, 5, 6, 7-hexasubstituierte Anthrachinone

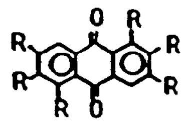

(5) Substituierte Cu-Komplexe

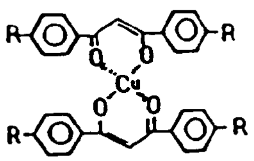

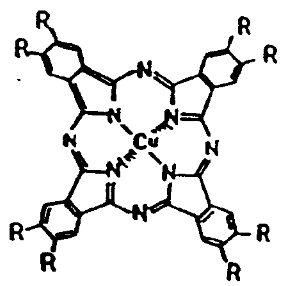

(6) Tetraarylbipyranylidum

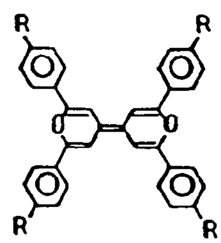

(7) Porphyrinderivate

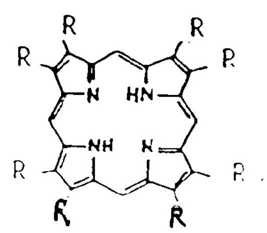

worin R jeweils unabhängig voneinander eine Aklkylgruppe mit bis zu 30 C-Atomen, worin auch eine oder mehrere $CH_2$-Gruppen durch -O-, -CO-, -O-CO-, -CO-O-, -C≡C-. -CH=CH-,

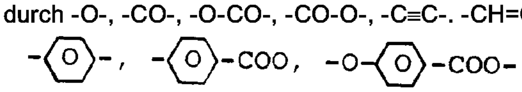

ersetzt sein können, wobei 2 O-Atome nicht direkt miteinander verknüpft sind.

Bevorzugt sind die Verbindungen (1), (2), (3) und (4); insbesondere jedoch die Verbindungen (1), (2) und (3). Besonders bevorzugt sind weiter diskotische Flüssig-kristallverbindungen, bei denen in allen Resten R mindestens eine $-CH_2$-Gruppe durch eine 1,4-Phenylengruppe ersetzt ist.

B bedeutet weiter bevorzugt eine stäbchenförmige ("rod-like") oder eine brettförmige ("board-like") mesogene Gruppe.

Als Beispiel für stäbchenförmige mesogene Gruppen können nematische Reste angeführt werden, die über ausreichend flexible Spacer an die Polymerkette gebunden sind. Die nematischen Reste können dann um die Moleküllängsachse rotieren und weisen daher eine Zylindersymmetrie auf.

Wird dagegen durch eine starre Spacergruppe die Rotation der nematischen Reste praktisch unterbunden, erhält man brettförmige mesogene Gruppen. Es können jedoch auch andere Reste mit brettförmiger Geometrie verwendet werden. In flüssigkristallinen Polymeren mit brettförmigen mesogenen Gruppen können nicht

nur die Moleküllängsachsen parallel angeordnet sein, sondern es ist darüberhinaus noch eine Orientierungsfernordnung bezüglich der Querachsen möglich. Solche flüssigkristalline Polymere bezeichnet man als biaxial nematisch.

Besonders bevorzugt bedeutet B einen Rest der Formel III

$$R^1\text{-}(A^1\text{-}Z^1)_n\text{-}A^2\text{-}Z^2\text{-}A^3\text{-} \qquad III$$

worin $R^1$, $R^2$, $A^1$, $A^2$, $A^3$, $Z^1$, $Z^2$ und n die oben angegebene Bedeutung haben.

Durch die Formel III sind 2-, 3-, 4- und 5-kernige Reste der Teilformel III 1 - III 4 umfaßt:

$$R^1\text{-}A^2\text{-}Z^2\text{-}A^3 \qquad III\ 1$$

$$R^1\text{-}A^1\text{-}Z^1\text{-}A^2\text{-}Z^2\text{-}A^3 \qquad III\ 2$$

$$R^1\text{-}A^1\text{-}Z^1\text{-}A^1\text{-}Z^1\text{-}A^2\text{-}Z^2\text{-}A^3 \qquad III\ 3$$

$$R^1\text{-}A^1\text{-}Z^1\text{-}A^1\text{-}Z^1\text{-}A^1\text{-}Z^1\text{-}A^2\text{-}Z^2\text{-}A^3 \qquad III\ 4$$

In den mesogenen Resten der Formel III bedeutet $R^1$ bevorzugt einen unsubstituierten oder durch mindestens ein Halogenatom substituierten Alkyl- oder Alkenylrest, worin eine oder zwei nicht benachbarte $CH_2$-Gruppen dieser Reste durch O-Atome und/oder durch -O-CO-, -CO-O- und oder -O-CO-O- Gruppen ersetzt sein können.

Halogen bedeutet vorzugsweise F oder Cl.

Ferner sind die mesogenen Reste der Formel III bevorzugt, worin $R^1$ CN, F oder Cl bedeutet.

Falls $R^1$ ein Alkylrest oder Alkoxyrest bedeutet, so kann dieser geradkettig oder verzweigt sein. Vorzugsweise ist er geradkettig, hat 2, 3, 4, 5, 6, 7 oder 8 C-Atome und bedeutet demnach bevorzugt Ethyl, Propyl, Butyl, Pentyl, Hexyl, Heptyl, Octyl, Ethoxy, Propoxy, Butoxy, Pentoxy, Hexoxy, Heptoxy oder Octoxy, ferner Methyl, Nonyl, Decyl, Undecyl, Dodecyl, Tridecyl, Tetradecyl, Pentadecyl, Methoxy, Nonoxy, Decoxy, Undexocy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls $R^1$ einen Alkenylrest bedeutet, so kann dieser geradkettig oder verzweigt sein. Vorzugsweise ist er geradkettig und hat 2 bis 10 C-Atome. Er bedeutet demnach besonders Vinyl, Prop-1- oder Prop-2-enyl, But-1-, 2- oder But-3-enyl, Pent-1-, 2-, 3- oder Pent-4-enyl, Hex-l-, 2-, 3-, 4- oder Hex-5-enyl, Hept-l-, 2-, 3-, 4-, 5- oder Hept-6-enyl, Oct-l-, 2-, 3-, 4-, 5-, 6- oder Oct-7-enyl, Non-l-, 2-, 3-, 4-, -5-, 6-, 7- oder Non-8-enyl, Dec-1-, 2-, 3-, 4-, 5-, 6-, 7-, 8- oder Dec-9-enyl.

Mesogene Reste der Formel II mit verzweigter Flügelgruppe $R^1$ können gelegentlich z.B. wegen einer Verminderung der Neigung zu Kristallisation oder zur Erzeugung einer verdrillten Struktur des flüssigkristallinen Polymers als Comonomere von Bedeutung sein. Verzweigte Gruppen dieser Art enthalten in der Regel nicht mehr als eine Kettenverzweigung. Bevorzugte verzweigte Reste $R^1$ sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 2-Octyloxy,2-Oxa-3-methylbutyl, 3-Oxa-4-methylpentyl, 4-Methylhexyl, 2-Nonyl, 2-Decyl, 2-Dodecyl, 6-Methyloctoxy, 6-Methyloctanoyloxy, 5-Methylheptyloxycarbonyl, 2-Methylbutyryloxy, 3-Methylvaleryloxy, 4-Methylhexanoyloxy, 2-Chlorpropionyloxy, 2-Chlor-3-methylbutyryloxy, 2-Chlor-4- methylvaleryloxy, 2-Chlor3-methylvaleryloxy, 2-Methyl-3-oxapentyl, 2-Methyl-3-oxahexyl.

2-, 3- und 4-kernige mesogene Reste sind bevorzugt. Weiter bevorzugt sind solche Reste, die nicht mehr als eine 1,4-Bicyclo(2,2,2)-octylengruppe, Piperiden-1,4-diylgruppe oder 1,2,3,4-Tetrahydronaphtalin-2,6-diylgruppe enthalten.

In 5-kernigen mesogenen Resten ist $Z^2$ bevorzugt eine Einfachbindung oder $-CH_2CH_2-$.

Von den mesogenen Resten der Formel III, die eine heterocyclische Gruppe enthalten, sind die mit einer Pyridin-2,5-diylgruppe, Pyridazin-2,5-diylgruppe, Pyrimidin-2,5-diylgruppe oder Piperidin-1,4-diylgruppe besonders bevorzugt.

Im folgenden wird eine kleinere Gruppe von besonders bevorzugten mesogenen Resten der Formeln III 1, III 2 und III 3 aufgeführt. Dabei bedeutet der Einfachheithalber Cyc eine 1,4-Cyclohexylengruppe, Dio eine Dioxan2,5-diylgruppe, Cy eine 1,4-Cyclohexylengruppe, worin worin auch eine oder zwei nicht benachbarte $CH_2$-Gruppen durch -O- ersetzt sein können, Phe eine 1,4-Phenylengruppe, worin auch eine oder mehrere CH-Gruppen durch N ersetzt sein können. PheX eine 1,4-Phenylengruppe, die ein- oder zweifach durch F, Cl und/oder $CH_3$ substituiert ist, Bi eine 1,4-Bicyclo[2.2.2]octylgruppe, Pip ein Piperidin-1,4-diylgruppe und Nap eine Deca-, Tetrahydronaphthalin-2,6-diyl- oder Naphthalin-2,6-diylgruppe.

Besonders bevorzugte mesogene Reste der Teilformeln III 1 sind die der Teilformeln III 1-1 bis III 1-8:

$$R^1\text{-Cyc-}Z^2\text{-Cyc-} \qquad III\ 1\text{-}1$$

$R^1$-Phe-$Z^2$-Phe- III 1-2
$R^1$-Phe-$Z^2$-PheX- III 1-3
$R^1$-Phe-$Z^2$-Cyc- III 1-4
$R^1$-Cyc-$Z^2$-Phe- III 1-5
$R^1$-Phe-$Z^2$-PheX- III 1-6
$R^1$-Cyc-$Z^2$-PheX- III 1-7
$R^1$-PheX-$Z^2$-Phe- III 1-8

In den Verbindungen der Teilformeln III 1-1 bis III 1-8 bedeutet R ganz besonders bevorzugt eine Alkyl- oder Alkenylgruppe, ferner Alkoxy oder Alkanoyloxy mit jeweils 1-13 C-Atomen. Weiter ist in diesen Verbindungen $Z^2$ ganz besonders bevorzugt eine Estergruppe C (-CO-O- oder -O-CO-), -$CH_2C_H2$- oder eine Einfachbindung.

Besonders bevorzugte mesogene Reste der Teilformeln III 2 sind die der Teilformeln III 2-1 bis III 2-16:

$R^1$-Phe-$Z^1$-Phe-$Z^2$-Phe- III 2-1
$R^1$-PheX-$Z^1$-Phe-$Z^2$-Phe- III 2-2
$R^1$-Phe-$Z^1$ -Phe-$Z^2$-PheX- III 2-3
$R^1$-Cyc-$Z^1$-Cyc-$Z^2$-Cyc- III 2-4
$R^1$-Cyc-$Z^1$-Phe-$Z^2$-Phe- III 2-5
$R^1$-Cyc-$Z^1$-Cyc-$Z^2$-Phe- III 2-6
$R^1$-Cyc-$Z^1$-Cyc-$Z^2$-Dio- III 2-7
$R^1$-Cyc-$Z^1$-Phe-$Z^2$-PheX- III 2-8
$R^1$-Cyc-$Z^1$-Cyc-$Z^2$-PheX- III 2-9
$R^1$-Bi-Cyc-$Z^2$ -Cyc- III 2-10
$R^1$-Nap-$Z^1$-Cyc-$Z^2$-Phe- III 2-11
$R^1$-Cy-$Z^1$-Phe-$Z^2$-Phe- III 2-12
$R^1$-Dio-$Z^1$-Cyc-$Z^2$-Cyc- III 2-13
$R^1$-Phe-$Z^1$-Cyc-$Z^2$-Cyc- III 2-14
$R^1$-Cyc-$Z^1$-Phe-$Z^2$-Cyc III 2-15
$R^1$-Cyc-$Z^1$-Phe-$Z^2$-Cyc III 2-16

Von den Verbindungen der Teilformel III 2-1 bis III 2-16, die eine 1,4-Phenylengruppe enthalten, worin eine oder zwei $CH_2$-Gruppen durch N ersetzt sind, sind diejenigen mit einer Pyridin-2,5-diylgruppe oder Pyrimidin-2,5-diylgruppe ganz besonders bevorzugt.

Besonders bevorzugte mesogene Reste der Teilformeln III 3 sind die der Teilformeln III 3-1 bis III 3-19:

$R^1$-Phe-$Z^1$-Phe-$Z^1$-Phe-$Z^2$-Phe- III 3-1
$R^1$-Cyc-$Z^1$-Cyc-$Z^1$-Cyc-$Z^2$-Cyc- III 3-2
$R^1$-Cyc-$Z^1$-Phe-$Z^1$-Phe-$Z^2$-Phe- III 3-3
$R^1$-Cyc-$Z^1$-Cyc-$Z^1$-Phe-$Z^2$-Phe- III 3-4
$R^1$-Cyc-$Z^1$-Cyc-$Z^1$-Cyc-$Z^2$-Phe- III 3-5
$R^1$-Cyc-$Z^1$-Phe-$Z^1$-Phe-Cyc- III 3-6
$R^1$-Cyc-$Z^1$-Cyc-$Z^1$-Phe-Cyc- III 3-7
$R^1$-Cyc-$Z^1$-Phe-$Z^1$-Cyc-$Z^2$-Cyc- III 3-8
$R^1$-Phe-$Z^1$-Cyc-$Z^1$-Cyc-$Z^2$-Cyc- III 3-9
$R^1$-Phe-$Z^1$-Phe-$Z^1$-Cyc-$Z^2$-Cyc III 3-10
$R^1$-Phe-$Z^1$-Phe-$Z^1$-Phe-$Z^2$-PheX- III 3-11
$R^1$-Phe-$Z^1$-Cyc-$Z^1$-PheX-$Z^2$-Phe- III 3-12
$R^1$-Cyc-$Z^1$-Cyc-$Z^1$-Phe-$Z^2$-PheX- III 3-13
$R^1$-Cyc-$Z^1$-PheX-$Z^1$-Phe-$Z^2$-Cyc- III 3-14
$R^1$ -Cyc-$Z^1$-Phe-$Z^1$-PheX-$Z^2$-Cyc- III 3-15
$R^1$-PheX-$Z^1$-Phe-$Z^1$-Cyc-$Z^2$-Cyc- III 3-16
$R^1$-Dio-$Z^1$-Cyc-$Z^1$-Cyc-$Z^2$-Cyc- III 3-17
$R^1$-Cyc-$Z^1$-Cyc-$Z^1$-Cy-$Z^2$-Phe- III 3-18
$R^1$-Cyc-$Z^1$-Pip-$Z^1$-Phe-$Z^2$-Phe- III 3-19

In den Verbindungen der Teilformeln III 3-1 bis III 3-19 ist ganz besonders bevorzugt mindestens eine der beiden $Z^1$-Gruppen oder $Z^2$ eine Einfachbindung.

Die ansteuerbaren Flüssigkristallschichten der elektrooptischen Systeme basieren bevorzugt auf dem ECB-Prinzip, das erstmals 1971 beschrieben wurde (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193), G. Labrunie und J. Robert (J. Appl. Phys. 44 (1973), 4869) und S. Matsumoto, M. Kawamoto und K. Mizunoya (J, Appl. Phys. 47 (1976), 3842).

Bei diesen elektrooptischen Systemen weist der in der (den) ansteuerbaren Flüssigkristallschicht(en) verwendete nematische Flüssigkristall eine negative dielektrische Anisotropie $\Delta\varepsilon$ auf, so daß die Flüssigkristallmoleküle bei Anlegen einer Spannung aus der homöotropen Orientierung in eine gekippt planare überführt werden.

Weiter basiert (basieren) die ansteuerbare(n) Flüssigkristallschicht(en) der erfindungsgemäßen elektrooptischen Systeme bevorzugt auf dem Prinzip der verdrillten nematischen Zelle. Dabei ist der Begriff verdrillte nematische Zelle hier weit gefaßt und umfaßt sowohl Standard-TN-Zellen mit einem Verdrillungswinkel von etwa $\pi/4$ (M. Schadt, W. Helfrich, Appl. Phys. Lett. 18 (1971) 127) als auch höher verdrillte Zellen mit Verdrillungswinkeln, die zwischen $\pi/4$ und $3\pi$ liegen. Derartige höher verdrillte Zellen sind z.B. in EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987); E.P. Raynes, Mol. Cryst. Liq. Cryst. Letters Vol. 4 (1), pp. 1-8 (1986); C.M. Waters et al., Proc. Soc. Inf. Disp. (New York) (1985) (3rd Intern. Display Conference, Kobe, Japan); DE OS 35 03 259; T.J. Scheffer und J. Nehring, Appl. Phys. Lett. 45 (1984) 1021; M. Schadt und F. Leenhouts, Appl. Phys. Lett. 50 (1987), 236.

Flüssigkristalline Polymere lassen sich dadurch axial ausrichten, daß das Polymer oberhalb der Glastemperatur einem elektrischen und/oder magnetischen Feld oder einer mechanischen Spannung ausgesetzt wird, was zu einer Ausrichtung der mesogenen Gruppen führt. Die solcherart induzierte Orientierung läßt sich einfrieren, indem das Polymer unter Beibehaltung der mechanischen Spannung bzw. bei eingeschaltetem Feld unter die Glastemperatur abgekühlt wird. Die Orientierung bleibt dann auch nach Abschalten des Feldes bzw. der mechanischen Spannung stabil. So beschreiben z.B. Shibaev et al. die dipolare Ausrichtung eines flüssigkristallinen Seitenkettenpolymers in einem elektrischen Wechselfeld oberhalb der Glastemperatur (V.P. Shibaev et al., Polymer Communications 24 (1983) 364). Schätzle et al. geben an, daß ein flüssigkristalliner Elastomerfilm oberhalb der Glastemperatur durch Anlegen einer Zugspannung axial orientiert werden kann (J. Schätzle, H. Finkelmann, Mol. Cryst. Lig. Cryst 142 (1987) 86). Die hier aufgeführten Verfahren zur Orientierung flüssigkristallinpolymerer Kompensationsfilme sollen die Erfindung jedoch nur beispielhaft erläutern und keineswegs begrenzen.

Die spezielle Ausgestaltung des erfindungsgemäßen Kompensationsfilms, d.h. die Wahl des Polymerentyps, der mesogenen Gruppe und der Art der Ausrichtung können im Hinblick auf die jeweilige Anwendung variiert und optimiert werden. Wenn es sich bei den ansteuerbaren Flüssigkristallschichten z. B. um TN- oder STN-Zellen handelt, bei denen die Flüssigkristallmoleküle im nicht angesteuerten Zustand verdrillt und im angesteuerten Zustand mehr oder Weniger senkrecht zu den Substraten angeordnet sind, ist zu unterscheiden, ob durch den Kompensationsfilm der optiche Gangunterschied in erster Linie im ausgeschalteten oder im eingeschalteten Zustand kompensiert werden soll.

Soll der optische Gangunterschied insbesondere im ausgeschalteten Zustand optimal ausgeglichen werden, basiert der Kompensationsfilm vorzugsweise auf Seitenkettenpolymeren oder Elastomeren mit mesogenen Gruppen der Formel III, die eine nematische, smektische oder cholesterische Phase und insbesondere eine nematische oder smektische Phase aufweisen. Der Kompensationsfilm wird so ausgerichtet und so z. B. auf dem oberen Substrat der ansteuerbaren Flüssigkristallschicht(en) angeordnet, daß die optischen Achsen von Kompensationsfilm und Flüssigkristallschicht im nicht angesteuerten Zustand aufeinander senkrecht stehen. Es ist z. B. aber auch möglich, daß die flüssigkristalline Kompensationsschicht eine cholesterische Struktur aufweist, wobei der Drehsinn der Helix in der Flüssigkristallschicht dem der Helix in der Kompensationsschicht entgegengesetzt ist und die Moleküle der Flüssigkristallschicht und die mesogenen Gruppen der Kompensationsschicht an dem gemeinsamen Substrat aufeinander im wesentlichen senkrecht stehen.

Soll dagegen z. B. zur Gewährleistung einer kleinen Blickwinkelabhängigkeit des Kontrastes in eingeschalteten Zustand der Gangunterschied insbesondere im eingeschalteten Zustand kompensiert werden, basiert die Kompensationsschicht insbesondere auf Seitenkettenpolymeren oder Elastomeren, die insbesondere diskotische mesogene Gruppen enthalten, wobei diese scheibchenartigen mesogenen Gruppen im wesentlichen parallel zu den Substratoberflächen, d. h. senkrecht zum anliegenden elektrischen Feld angeordnet sind.

Der Fachmann kann eine derartige Optimierung und Anpassung der erfindungsgemäßen Kompensationsfilme im Hinblick auf die jeweilige Aufgabenstellung im Rahmen der vorliegenden Offenbarung ohne weiteres erfinderisches Zutun jederzeit durchführen.

Die in den erfindungsgemäßen elektrooptischen Segmenten verwendeten Vorrichtungen zur Kompensation des optischen Gangunterschieds d.$\Delta$n der ansteuerbaren Flüssigkristallschichten sind herkömmlichen Vorrichtungen deutlich überlegen.

Die folgenden Beispiele sollen die Erfindung erläutern, ohne sie zu begrenzen. Die angegebenen Spacerlängen bedeuten die Zahl n des Spacers $-(CH_2)_n-$. Die monomerenverhältnisse sind in Molprozent angegeben.

Beispiel 1

verwendetes Elastomer:

| | | Monomeren-verhältnis |
|---|---|---|
| Polymerrückgrat: | Polymethacrylat | |
| mesogene Gruppe: | 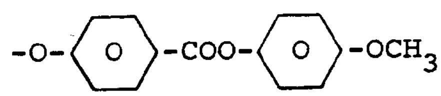 | 93 |
| Comonomer: | 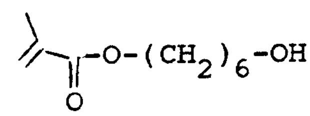 | 4,5 |
| Spacerlänge: | 6 | |
| Vernetzer: | 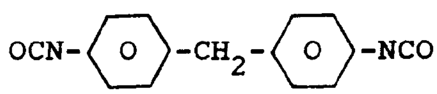 | 2,5 |
| Glastemperatur: | 65 °C, Klärpunkt: 101 °C | |

Aus dem vernetzten Polymer wird nach J. Schätzle, H. Finkelmann, Mol. Cryst. Liq. Cryst. 142, 85 (1987) ein Film mit einer Dicke von 50 µm hergestellt; anschließend wird der Film auf eine Temperatur von 80 °C erhitzt und uniaxial verstreckt. Durch Abkühlen auf Raumtemperatur unter mechanischer Spannung wird die makroskopische Orientierung eingefroren, ersichtlich aus der starken Doppelbrechung des Films. Die Bestimmung der Doppelbrechung erfolgt mit einem Soleil-Babinet-Kompensator (L.R.G. Treloar, "The physics of Rubber Elasticity", Clavendon Press, Oxford, 1975).

Der Film zeigt eine Doppelbrechung von 0.12 bei einer Wellenlänge von 632 nm.

Beispiel 2

verwendetes Elastomer:

| | | Monomeren-verhältnis |
|---|---|---|
| Polymerrückgrat: | Polymethacrylat | |
| mesogene Gruppe: | 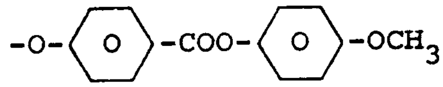 | 93 |
| Comonomer: | 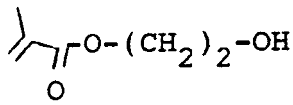 | 5 |
| Spacerlänge: | 2 | |
| Vernetzer: | 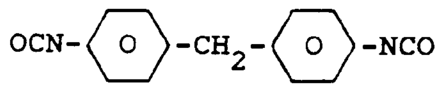 | 2 |
| Glastemperatur: | 45 °C; Klärpunkt: 120 °C | |

Aus diesem Polymer wird ein Film mit einer Dicke von 50 μm hergestellt. Anschließend wird der Film durch zwei gegensinnig rotierende Rollen gepreßt; dies ergibt einen Film mit einer Dicke von 7 μm.

Uniaxiale Verstreckung eines Films bei 60 °C und anschließendes Abkühlen unter mechanischer Spannung ergibt einen transparenten, uniaxial verstreckten Film mit einer optischen Verzögerung von 0.88. Die Brechungsindexdispersion des Films entspricht der einer typischen Flüssigkristallmischung für STN-Anwendungen wie ZLI-2293 (E. MERCK, Darmstadt).

Der Einsatz der erfindungsgemäßen Filme anstelle kommerziell erhältlicher Filme (z.B. der Firmen Sumitomo Chemicals und Nitto Denko) ergibt elektrooptische Systeme mit verbesserter Transmission.

**Patentansprüche**

1. Elektrooptisches System, enthaltend mindestens eine ansteuerbare Flüssigkristallschicht und eine auf einem flüssigkristallinen Polymer basierende Vorrichtung zur Kompensation des optischen Gangunterschiedes dΔn der ansteuerbaren Flüssigkristallschicht bzw. -schichten, dadurch gekennzeichnet, daß als flüssigkristalline Polymere Seitenkettenpolymere verwendet werden, enthaltend Monomereinheiten der Formel I

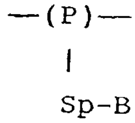

I

worin

P eine Polymerhauptketteneinheit,

Sp eine bivalente Spacergruppe, und

B einen organischen "rod-like"-Rest mit mindestens zwei sechsgliedrigen Gruppen, einen "disk-like"- oder einen "board-like"-Rest bedeutet.

2. Elektrooptisches System, enthaltend mindestens eine ansteuerbare Flüssigkristallschicht und eine auf einem flüssigkristallinen Polymer basierende Vorrichtung zur Kompensation des optischen Gangunterschiedes d$\Delta$n der ansteuerbaren Flüssigkristallschicht bzw. -schichten, dadurch gekennzeichnet, daß als flüssigkristalline Polymere Elastomere verwendet werden, enthaltend 3-dimensional vernetzte Monomereinheiten der Formel II

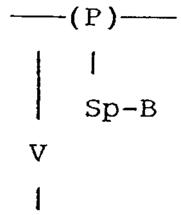

II

worin

P eine Polymerhauptketteneinheit,

Sp eine bivalente Spacergruppe,

B einen organischen "rod-like"-Rest mit mindestens zwei sechsgliedrigen Gruppen, einen "disk-like"- oder einen "board-like"-Rest, und

V eine vernetzende Einheit zwischen zwei benachbarten Polymerketten bedeutet.

3. Elektrooptisches System nach mindestens einem der Ansprüche 1 oder 2, dadurch gekennzeichnet, daß B einen Rest der Formel III

$$R^1\text{-}(A^1\text{-}Z^1)_n\text{-}A^2\text{-}Z^2\text{-}A^3\text{-} \qquad \text{III}$$

bedeutet,

worin

$R^1$ F, CN oder ein unsubstituierter oder durch mindestens ein Halogenatom substituierter Alkylrest mit jeweils 1-15 C-Atomen, worin eine oder mehrere nicht benachbarte $CH_2$-Gruppen durch O- und/oder S-Atome und/oder durch -CO-, -O-CO-, -CO-O-, -O-CO-O-, -S-CO- und/oder -CO-S- und/oder -CH=CH-Gruppen ersetzt sein können,

$Z^1$ und $Z^2$ jeweils unabhängig voneinander -CO-O-, -O-CO-, $-CH_2CH_2-$, $-CH_2-O-$, $-OCH_2-$, -C≡C- oder eine Einfachbindung,

$A^1$, $A^2$ und $A^3$ jeweils unabhängig voneinander eine 1,4-Phenylengruppe, worin auch eine oder mehrere CH-Gruppen durch N ersetzt sein können, eine 1,4-Cyclohexylengruppe, worin auch eine oder zwei nicht benachbarte $CH_2$-Gruppen durch O und/oder S ersetzt sein können, eine 1,4-Cyclohexenylengruppe, eine 1,4-Bicyclo(2,2,2)-octylengruppe, eine Piperidin-l,4-diylgruppe, eine Naphthalin-2,6-diylgruppe, eine Decahydronaphthalin-2,6-diylgruppe, eine 1,2,3,4-Tetrahydronaphthalin-2,6-diylgruppe, wobei alle diese Gruppen unsubstituiert oder durch Halogen, Nitril und/oder 1-4-C-Alkyl ein- oder mehrfach substituiert sein können,

n 0, 1, 2 oder 3 ist.

4. Elektrooptisches System nach mindestens einem der Ansprüche 1 - 3, dadurch gekennzeichnet, daß Sp eine Alkylengruppe mit 1-20 C-Atomen ist, worin auch eine oder mehrere nicht benachbarte $CH_2$-Gruppen durch -O-, -S- -CO- -O-CO-, -S-CO- -O-COO-, -CO-S-, -CO-O-, -CH-Halogen, -CHCN-, -CH=CH- und -C≡C- ersetzt sein können.

5. Elektrooptisches System nach mindestens einem der Ansprüche 1 3, dadurch gekennzeichnet, daß -(P)- Polyacrylat, Polymethacrylat, Poly-$\alpha$-halogenacrylat, Poly-$\alpha$-cyanacrylat, Polyacrylamid, Polyacrylnitril, Polymethylenmalonat, Polyether, Polyester, Polyamid, Polyimid, Polyurethan oder Polysiloxan bedeutet.

6. Elektrooptisches System nach mindestens einem der Ansprüche 1-5, dadurch gekennzeichnet, daß das System auf dem ECB-Prinzip basiert.

7. Elektrooptisches System nach mindestens einem der Ansprüche 1-5, dadurch gekennzeichnet, daß das System auf dem Prinzip der verdrillten nematischen Zelle basiert.

8. Elektrooptisches System nach Anspruch 7, dadurch gekennzeichnet, daß der Verdrillungswinkel $\beta$ zwi-

schen $\pi/4$ und $3\pi$ liegt.

9. Elektrooptisches System nach mindestens einem der Ansprüche 1 - 8, dadurch gekennzeichnet, daß das Verhältnis aus dem optischen Gangunterschied der Kompensationsvorrichtung zu dem optischen Gangunterschied der ansteuerbaren Flüssigkristallschicht bzw. -schichten

$$0{,}5 \leqq \frac{(d\Delta n)_{Komp}}{(d\Delta n)_{FK}} \leqq 1{,}5$$

beträgt.

10. Verfahren zur Herstellung einer Vorrichtung zur Kompensation des optischen Gangunterschieds $d{\cdot}\Delta n$ der ansteuerbaren Flüssigkristallschicht, welche auf einem flüssigkristallinen Polymer nach mindestens einem der Ansprüche 1-5 basiert, dadurch gekennzeichnet, daß das flüssigkristalline Polymer oberhalb der Glastemperatur durch Anlegen eines elektrischen oder magnetischen Feldes oder durch mechanische Spannung axial orientiert wird, und daß diese Orientierung durch Abkühlung des flüssigkristallinen Polymers auf Temperaturen, die kleiner als die Glastemperatur sind, eingefroren wird.

11. Verwendung eines flüssigkristallinen Polymers nach mindestens einem der Ansprüche 1- 5 in elektrooptischen Systemen zur Kompensation des optischen Gangunterschieds der ansteuerbaren Flüssigkristallschichten.

## Claims

1. Electro-optical system containing at least one addressable liquid-crystal layer and a device based on a liquid-crystalline polymer for compensating for the optical path difference $d\Delta n$ [sic] of the addressable liquid-crystal layer or layers, characterized in that, as liquid-crystalline polymers, use is made of side-chain polymers containing monomer units of the formula I:

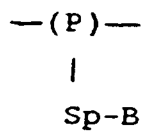

I

in which

| | |
|---|---|
| P | is a polymer main-chain unit, |
| Sp | is a bivalent spacer group, and |
| B | is an organic "rod-like" radical containing at least two six-membered groups, a "disc-like" or a "board-like" radical. |

2. Electro-optical system containing at least one addressable liquid-crystal layer and a device based on a liquid-crystalline polymer for compensating for the optical path difference $d\Delta n$ of the addressable liquid-crystal layer or layers, characterized in that, as liquid-crystalline polymer, use is made of elastomers containing 3-dimensionally crosslinked monomer units of the formula II:

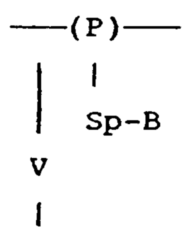

II

in which

| | |
|---|---|
| P | is a polymer main-chain unit, |
| Sp | is a bivalent spacer group, |
| B | is an organic "rod-like" radical containing at least two six-membered groups, a "disc-like" or a "boardlike" radical, and |

V is a crosslinking unit between two adjacent polymer chains.

3. Electro-optical system according to at least one of Claims 1 or 2, characterized in that B is a radical of the formula III:

$$R^1\text{-}(A^1\text{-}Z^1)_n\text{-}A^2\text{-}Z^2\text{-}A^3\text{-} \qquad \text{III}$$

in which

$R^1$ is F, CN or an unsubstituted alkyl radical or an alkyl radical substituted by at least one halogen atom containing, in all cases, 1-15 carbon atoms, in which one or more nonadjacent $CH_2$ groups may be replaced by oxygen and/or sulfur atoms and/or by -CO-, -O-CO-, -CO-O-, -O-CO-O-, -S-CO- and/or -CO-S- and/or -CH=CH- groups,

$Z^1$ and $Z^2$ are, in each case independently of one another, -CO-O-, -O-CO-, $-CH_2CH_2-$, $-CH_2-O-$, $-OCH_2-$, -C≡C - or a single bond,

$A^1$, $A^2$ and $A^3$ are, in each case independently of one another, a 1,4-phenylene group in which one or more CH groups may also be replaced by nitrogen, a 1,4-cyclohexylene group in which one or two non-adjacent $CH_2$ groups may also be replaced by oxygen and/or sulfur, a 1,4-cyclohexenylene group, a 1,4-bicyclo[2.2.2]octylene group, a 1,4-piperidinediyl group, a 2,6-naphthalenediyl group, a 2,6-decahydronaphthalenediyl group, a 2,6-(1,2,3,4-tetrahydro)naphthalenediyl group, it being possible for all these groups to be unsubstituted or monosubstituted or polysubstituted by halogen, nitrile and/or 1-4-carbon alkyl, and

n is 0, 1, 2 or 3.

4. Electro-optical system according to at least one of Claims 1-3, characterized in that Sp is an alkylene group containing 1-20 carbon atoms, in which one or more nonadjacent $CH_2$ groups may also be replaced by -O-, -S-, -CO-, -O-CO-, -S-CO-, -O-COO-, -CO-S-, -CO-O-, -CH- halogen, -CHCN-, -CH=CH- and -C≡C-.

5. Electro-optical system according to at least one of Claims 1-3, characterized in that -(P)- is polyacrylate, polymethacrylate, poly-α-haloacrylate, poly-α-cyanoacrylate, polyacrylamide, polyacrylonitrile, polymethylene malonate, polyether, polyester, polyamide, polyimide, polyurethane or polysiloxane.

6. Electro-optical system according to at least one of Claims 1-5, characterized in that the system is based on the ECB principle.

7. Electro-optical system according to at least one of Claims 1-5, characterized in that the system is based on the principle of the twisted nematic cell.

8. Electro-optical system according to Claim 7, characterized in that the twist angle β is between π/4 and 3π.

9. Electro-optical system according to at least one of Claims 1-8, characterized in that the ratio of the optical path difference of the compensation device to the optical path difference of the addressable liquid-crystal layer or layers is

$$0.5 \leqq \frac{(d\Delta n)\ \mathrm{comp}}{(d\Delta n)_{LC}} \leqq 1{,}5$$

10. Process for producing a device for compensating for the optical path difference d.Δn of the addressable liquid-crystal layers, which device is based on a liquid-crystalline polymer according to at least one of Claims 1-5, characterized in that the liquid-crystalline polymer is axially oriented by applying an electrical or magnetic field or by mechanical stress above the glass transition temperature, and in that this orientation is frozen-in by cooling the liquid-crystalline polymer to temperatures which are less than the glass transition temperature.

11. Use of a liquid-crystalline polymer according to at least one of Claims 1-5 in electro-optical systems for compensating for the optical path difference of the addressable liquid-crystal layers.

## Revendications

1. Système électro-optique contenant au moins une couche à cristaux liquides réglable et un dispositif à base d'un polymère à cristaux liquides pour la compensation de la différence de pas optique d.Δn de la ou des couches à cristaux liquides réglables, caractérisé en ce qu'on utilise comme polymère à cristaux liquides des polymères à chaîne latérale contenant des unités monomères de formule I

```
-(-P-)-
   |
   Sp-B            I
```

dans laquelle

| | |
|---|---|
| P | représente une unité de chaîne principale de polymère, |
| Sp | représente un groupe d'espacement bivalent, et |
| B | représente un radical "en bâtonnet" organique avec au moins deux groupes à six chaînons, un radical "en disque" ou "en plaque". |

2. Système électro-optique contenant au moins une couche à cristaux liquides réglable et un dispositif à base de polymère à cristaux liquides pour la compensation de la différence de pas optique d.Δn de la ou des couches à cristaux liquides réglables, caractérisé en ce qu'on utilise comme polymères à cristaux liquides des élastomères contenant des unités monomères réticulés tri-dimensionnelles de formule II

```
-(P)-
|  |
|  Sp-B            II
|
V
```

dans laquelle

| | |
|---|---|
| P | représente une unité de chaîne principale polymère, |
| Sp | représente un groupe d'espacement bivalent, |
| B | représente un radical "en bâtonnet" organique, comportant au moins deux groupes à six chaînons, un radical "en disque" ou "en plaque", et |
| V | représente une unité réticulante entre deux chaînes polymère voisines. |

3. Système électro-optique selon au moins une des revendications 1 ou 2, caractérisé en ce que B représente un radical de formule III

$$R^1\text{-}(A^1\text{-}Z^1)_n\text{-}A^2\text{-}Z^2\text{-}A^3\text{-} \qquad \text{III}$$

dans laquelle :

| | |
|---|---|
| $R^1$ | représente F, CN ou un radical alkyle non substitué ou substitué par au moins un atome d'halogène et présentant à chaque fois de 1 à 15 atomes de carbone, où un ou plusieurs groupes $CH_2$ non voisins peuvent être remplacés par des atomes d'oxygène et/ou de soufre ou par des groupes -CO-, -O-CO-, -CO-O-, -O-CO-O-, -S-CO- et/ou -CO-S- et/ou -CH=CH |
| $Z^1$ et $Z^2$ | représentent à chaque fois indépendamment l'un de l'autre -CO-O-, -O-CO-, -$CH_2CH_2$-, -$CH_2$-O-, -O$CH_2$-, C≡C- ou une liaison simple, |
| $A^1$, $A^2$ et $A^3$ | représentent chacun indépendamment l'un de l'autre un groupe 1,4-phénylène, où également un ou plusieurs groupes CH peuvent être remplacés par N, un groupe 1,4-cyclohexylène, où également un ou deux groupes $CH_2$ non voisins peuvent être remplacés par O et/ou S, un groupe 1,4-cyclohexylène, un groupe 1,4-bicyclo(2,2,2)-octylène, un groupe pipéridine-1,4-diyle, un groupe naphtalène-2,6-diyle, un groupe décahydronaphtalène-2,6-diyle, un groupe 1,2,3,4-tétrahydronaphtalène-2,6-diyle, tous ces groupes pouvant être mono ou poly substitués par un halogène, un nitrile et/ou un alkyle en $C_1$ à $C_4$, |
| n | vaut 0, 1, 2 ou 3. |

4. Système électro-optique selon au moins une des revendications 1 à 3, caractérisé en ce que Sp est un groupe alcylène en $C_1$ à $C_{20}$, dans lequel également un ou plusieurs groupes $CH_2$ non voisins peuvent être remplacés par -O-, -S-, -CO-, -O-CO-, -S-CO-, -O-COO-, -CO-S-, -CO-O-, -CH-halogène, -CHCN-, -CH=CH- et -C≡C-.

5. Système électro-optique selon au moins une des revendications 1 à 3, caractérisé en ce que P représente un polyacrylate, polyméthacrylate, poly-α-halogèneacrylate, poly-α-cyanacrylate, polyacrylamide, polyacrylonitrile, polyméthylènemalonate, polyéther, polyester, polyamide, polyimide, polyuréthane ou polysiloxane.

6. Système électro-optique selon au moins une des revendications 1-5, caractérisé en ce que le système est à base du principe ECB.

7. Système électro-otique selon au moins une des revendications 1-5, caractérisé en ce que le système est fondé sur le principe de la cellule nématique torsadée.

8. Système électro-optique selon la revendication 7, caractérisé en ce que l'angle de torsade β est compris entre $\pi/4$ et $3\pi$.

9. Système électro-optique selon au moins une des revendications 1-8, caractérisé en ce que le rapport de la différence de pas optique du dispositif de compensation à la différence de pas optique de la ou des couches à cristaux liquides réglables s'élève à

$$0,5 \leqq \frac{(d.\Delta n)_{comp}}{(d.\Delta n)_{FK}} \leqq 1,5$$

10. Procédé de préparation d'un dispositif de compensation de la différence de pas optique $d.\Delta n$ des couches à cristaux liquides réglables qui est fondé sur un polymère à cristaux liquides selon au moins une des revendications 1-5, caractérisé en ce que le polymère à cristaux liquides au-dessus de la température de transition vitreuse est orientée de façon axiale par application d'un champ électrique ou magnétique ou par une tension mécanique, et en ce que cette orientation est congelée par refroidissement du polymère à cristaux liquides à des températures inférieures à la température de transition vitreuse.

11. Application d'un polymère à cristaux liquides selon au moins l'une des revendications 1-5 dans des systèmes électro-optiques pour la compensation de la différence de pas optique de couches à cristaux liquides réglables.